# EUROPEAN PATENT SPECIFICATION

(11) **EP 3 001 032 B1**
(45) Date of publication and mention of the grant of the patent: **03.05.2017**
(21) Application number: 15169299.3
(22) Date of filing: 27.05.2015
(51) Int. Cl.: F03G 7/08

(54) **A DEVICE FOR RECOVERING ENERGY OF A MOTOR VEHICLE**
VORRICHTUNG ZUR ENERGIERÜCKGEWINNUNG BEI EINEM KRAFTFAHRZEUG
DISPOSITIF DE RÉCUPÉRATION D'ÉNERGIE D'UN VÉHICULE AUTOMOBILE

(30) Priority: 25.09.2014 PL 40958914
(43) Date of publication of application: 30.03.2016
(73) Proprietor: Wojskowy Instytut Techniki Inzynieryjnej im. profesora Jozefa Kosackiego, 50-961 Wroclaw (PL)
(72) Inventor: SLIWINSKI, Cezary, 50-540 Wroclaw (PL)
(74) Representative: Kancelaria Eupatent.pl Sp. z.o.o

(56) References cited:
- WO-A1-2013/157278
- CA-A1- 2 682 139
- FR-A1- 2 989 129
- US-A1- 2009 224 539

## Description

### TECHNICAL FIELD

The present invention relates to a device for recovering energy of a motor vehicle.

### BACKGROUND

There are known devices for recovering energy of motor vehicles, which are connected to a wheel and to a steering system and use alternators and batteries for energy storage or flywheels for torque accumulation. The accumulated energy is then used to drive the vehicle.

A Canadian patent application CA2682139 discloses an energy recovery system for a vehicle, that comprises an arm mounted between a chassis of a vehicle and an axle of the vehicle. The arm is configured to pivot with respect to the chassis and the axle when the chassis is vertically displaced with respect to the axle. A one-way ratchet assembly couples the arm to an output shaft and is movable between an engaged position and a disengaged position. A torsion spring is coupled to the output shaft such that when the output shaft is rotated in a first direction, the torsion spring is tightened. An electromechanical assembly is configured to move the ratchet assembly from the engaged position to the disengaged position when the torsion spring reaches a pre-determined tightness, so that when the ratchet assembly is in the disengaged position, the torsion spring loosens and induces rotation of the output shaft in the second direction.

### SUMMARY

The object of the invention is a device for recovering energy of a motor vehicle according to the appended claim.

An advantage of the present invention is its versatility, enabling the device to adapt to any beam, driving axle or non-driving axle. An advantage of this solution is also a possibility of increasing a number of elements contributing to the energy recovery. The device may be improved by adding further modules for energy recovery in a rectangular pattern along the axis of symmetry of the vehicle or in a circular pattern around the axis of symmetry of the vehicle's drive shafts.

### BRIEF DESCRIPTION OF THE DRAWINGS

The invention is presented by means of exemplary embodiment in a drawing, in which:

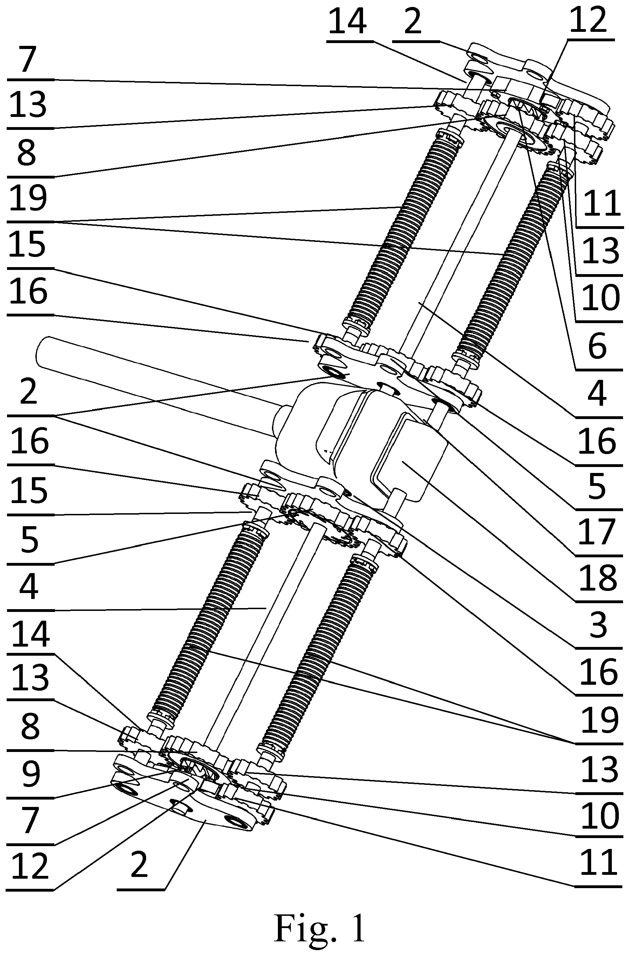

Fig. 1 shows the device in an isometric top view without shields of moveable parts and without the suspension frame; and

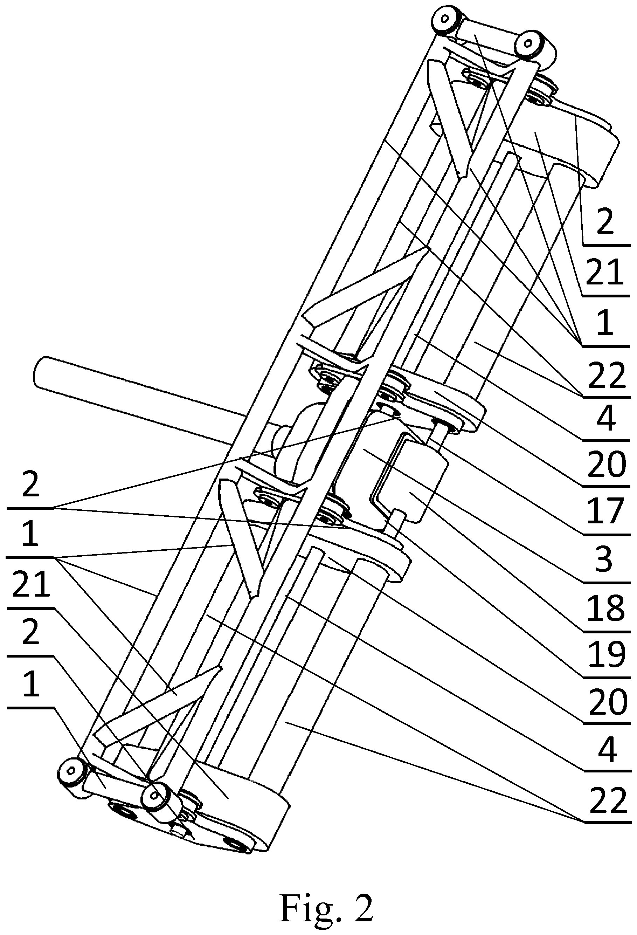

Fig. 2 shows the device in an isometric top view.

### DETAILED DESCRIPTION

A device for recovering energy of a motor vehicle comprises a suspension frame 1, to which there are mounted device handles 2 and a differential gear 3, which is coupled to drive shafts 4 mounted on bearings in the device handles 2.

On the drive shafts 4 there are mounted one-way clutches 5, traveling discs of dog clutches 6 with actuating mechanisms of dog clutches 7 and first gears mounted on bearings 8 with fixed discs 9.

In the device handles 2 there are mounted, on bearings, first shafts 10, on which there are mounted second gears 11 mating with an interlocking mechanism 12, and third gears 13 mating with the first gears 8 and with second shafts 14, on which there are mounted third gears 15, on which there are mounted fourth gears 16 mating with the one-way clutches 5.

In the device handles 2 there is mounted a fourth shaft 17 on bearings, on which there is attached a multiple-disc friction clutch 18, which is also mounted to the differential gear 3 and to fourth gears 16 mating with the one-way clutches 5.

The first shafts 10 and the fourth shaft 17, as well as the second gears 14 and the third gears 15, are connected with torsion springs.

First shields 20 cover the one-way clutches 5 and the fourth gears 16, and second shields 21 cover the actuating mechanism of the dog clutch 7, the first gears 8, the second gears 11 and the third gears 13. Both shields are mounted to the device handles 20.

Third shields 22, covering the torsion springs 19, are mounted between the first shields 20 and the second shields 21.

The operation of the device is based on that the actuating mechanisms of the dog clutches 7 push closer the movable discs of the dog clutches 6 to the fixed discs of the dog clutches 9, transferring torque from the drive shafts 4 on the first gears 8 in order to set the third gears 13 in motion.

The multiple-disc friction clutch 18 is actuated at the same time and it stops the fourth shaft 17 together with the fourth gears 16, set on it, and the one-way clutches 5 mating with them.

The difference of the rotational speed of the third gears 13 and the fourth gears 16 causes torsion of the torsion springs 19.

Obtaining an appropriate torsion angle of the fronts of the torsion springs 19 causes the disconnection of the multiple-disc friction clutch 18, and that is why the rotational speed of the third gears 13 and fourth gears 16 are equal.

The actuating mechanisms of the dog clutches 7 move away the traveling discs of the dog clutches 6 from the fixed discs of the dog clutches 9 and the interlocking mechanisms 12 stop the second gears 11. As a result of this, the first shafts 10 there are immobilized, the third gears 13, set on them, and the first gears 8 mating with them.

In a further step, torque accumulated in the torsion springs 19 is given back by means of the fourth gears 16 via the one-way clutches 5 onto the drive shafts 4.

When the energy, stored in the torsion springs 19 has been transferred, the interlocking mechanisms 12 are disconnected and the device is in a standby mode.

## Claims

1. A device for recovering energy of a motor vehicle, the device comprising:
- four handles (2) mounted to a suspension frame (1), wherein two side handles (2) are mounted at opposite sides of the suspension frame (1) and the other two central handles (2) are mounted near the center of the frame (1);
- a differential gear (3), and a multiple-disc friction clutch (18), both mounted between the two central handles (2);
- two pairs of elongated torsion springs (19);
- two drive shafts (4), , each arranged between the central handle (2) and the side handle (2) at opposite sides of the differential gear (3);;
**characterized in that**
- each drive shaft (4) comprises:
- a one way clutch (5) arranged on the drive shaft (4) near the central handle (2); and
- a first gear (8) mounted on the drive shaft (4) near the side handle (2);
- wherein each drive shaft (4) is coupled at its first end to the central handle (2) and at its opposite end to the side handle (2) by means of a dog clutch (7), the dog clutch (7) comprising:
- a traveling disc (6) arranged on the drive shaft (4);
- a fixed disc (9) arranged on the side handle (2);
- a movable actuating mechanism (7) for connecting and disconnecting the traveling disc (6) with respect to the fixed disc (9);
- an interlocking mechanism (12) arranged on the side handle (2),
- wherein each pair of the torsion springs (19) is arranged along each one of the drive shafts (4) between the central handle (2) and the side handle (2), and wherein:
- the first spring (19) of the pair of the torsion springs (19):
- is coupled at its first end to the side handle (2) by means of a first shaft (10), the first shaft (10) having a second gear (11) mating with the interlocking mechanism (12) of the dog clutch (7), and a third gear (13) mating with the first gear (8) of the drive shaft (4);
- and is coupled at its second end to the multiple-disc friction clutch (18) by means of a fourth shaft (17) comprising the fourth gear (16) mounted on the fourth shaft (17) and mating with the one way clutch (5) of the drive shaft (4), the fourth shaft (17) being coupled to the multiple-disc friction clutch (18) trough the central handle (2)
- the second spring (19) of the pair of the torsion springs (19):
- is coupled at its first end to the side handle (2) by means of a second shaft (14), the second shaft (14) having mounted a third gear (13) mating with the first gear (8) of the drive shaft (4);
- and is coupled at its second end to the third shaft (15), the fourth shaft having mounted a fourth gear (16) mating with a one way clutch (5) of the drive shaft (4), and wherein the fourth shaft (15) is connected, in the bearings, to the central handle (2).

## Patentansprüche

1. Vorrichtung zur Rückgewinnung der Energie eines Kraftfahrzeugs, wobei die Vorrichtung folgendes umfasst:
- vier Griffstücke (2), die an einem Aufhängerahmen (1) angebracht sind, wobei zwei seitliche Griffstücke (2) an entgegengesetzten Seiten des Aufhängerahmens (1) angebracht sind, und wobei die anderen beiden zentralen Griffstücke (2) nahe der Mitte des Rahmens (1) angebracht sind;
- ein Ausgleichszahnrad (3) und eine Mehrscheiben-Reibungskupplung (18), die beide zwischen den zentralen Griffstücken (2) angebracht sind;
- zwei Paare elongierter Torsionsfedern (19);
- zwei Antriebswellen (4), die zwischen dem zentralen Griffstück (2) und dem seitlichen Griffstück (2) auf entgegengesetzten Seiten des Ausgleichszahnrads (3) angeordnet sind;
**dadurch gekennzeichnet, dass**
- jede Antriebswelle (4) folgendes umfasst:
- einen Freilauf (5), der an der Antriebswelle (4) nahe dem zentralen Griffstück (2) angebracht ist; und
- ein erstes Zahnrad (8), das an der Antriebswelle (4) nahe dem seitlichen Griffstück (2) angebracht ist;
- wobei jede Antriebswelle (4) an ihrem ersten Ende mit dem zentralen Griffstück (2) gekoppelt ist und an ihrem entgegengesetzten Ende mit dem seitlichen Griffstück (2), und zwar durch eine Klauenkupplung (7), wobei die Klauenkupplung (7) folgendes umfasst:
- eine bewegliche Scheibe (6), die an der Antriebswelle (4) angeordnet ist;
- eine feste Scheibe (9), die an dem seitlichen Griffstück (2) angeordnet ist;
- einen beweglichen Stellmechanismus (7) zur Verbindung und Trennung der beweglichen Scheibe (6) im Verhältnis zu der festen Scheibe (9);
- einen Verriegelungsmechanismus (12), der an dem seitlichen Griffstück (2) angeordnet ist;
- wobei jedes Paar von Torsionsfedern (19) entlang jeder der Antriebswellen (4) zwischen dem zentralen Griffstück (2) und dem seitlichen Griffstück (2) angeordnet ist, und wobei:
- die erste Feder (19) des Paars der Torsionsfedern (19):
- an ihrem ersten Ende durch eine erste Welle (10) mit dem seitlichen Griffstück (2) gekoppelt ist, wobei die erste Welle (10) ein zweites Zahnrad (11) aufweist, das mit dem Verriegelungsmechanismus (12) der Klauenkupplung (7) zusammenpasst, und ein drittes Zahnrad (13), das mit dem ersten Zahnrad (8) der Antriebswelle (4) zusammenpasst;
- und an ihrem zweiten Ende durch eine vierte Welle (17) mit der Mehrscheiben-Reibungskupplung (18) gekoppelt ist, umfassend das vierte Zahnrad (16), das an der vierten Welle (17) angebracht ist und mit dem Freilauf (5) der Antriebswelle (4) zusammenpasst, wobei die vierte Welle (17) über das zentrale Griffstück (2) mit der Mehrscheiben-Reibungskupplung (18) gekoppelt ist;
- die zweite Feder (19) des Paars der Torsionsfedern (19):
- an ihrem ersten Ende durch eine zweite Welle (14) mit dem seitlichen Griffstück (2) gekoppelt ist, wobei die zweite Welle (14) ein angebrachtes drittes Zahnrad (13) aufweist, das mit dem ersten Zahnrad (8) der Antriebswelle (4) zusammenpasst;
- und an ihrem zweiten Ende mit der dritten Welle (15) gekoppelt ist, wobei die vierte Welle ein angebrachtes viertes Zahnrad (16) aufweist, das mit einem Freilauf (5) der Antriebswelle (4) zusammenpasst, und wobei die vierte Welle (15) in Lagern mit dem zentralen Griffstück (2) verbunden ist.

## Revendications

1. Dispositif de récupération d'énergie d'un véhicule à moteur, le dispositif comprenant :
quatre poignées (2) montées sur un châssis de suspension (1), deux poignées latérales (2) étant montées sur les côtés opposés du châssis de suspension (1) et les deux autres poignées centrales (2) étant montés près du centre du châssis (1) ;
un engrenage différentiel (3) et un embrayage à friction multidisque (18), tous deux montés entre les deux poignées centrales (2) ;
deux paires de ressorts de torsion allongés (19) ;
deux arbres d'entraînement (4), chacun étant disposé entre la poignée centrale (2) et la poignée latérale (2) au niveau de côtés opposés de l'engrenage différentiel (3) ;
**caractérisé en ce que**
chaque arbre d'entraînement (4) comprend :
un embrayage unidirectionnel (5) disposé sur l'arbre d'entraînement (4) près de la poignée centrale (2) ; et
un premier engrenage (8) monté sur l'arbre d'entraînement (4) près de la poignée latérale (2) ;
chaque arbre d'entraînement (4) étant accouplé au niveau de sa première extrémité à la poignée centrale (2) et au niveau de son extrémité opposée à la poignée latérale (2) à l'aide d'un embrayage à griffes (7), l'embrayage à griffes (7) comprenant :
un disque mobile (6) disposé sur l'arbre d'entraînement (4) ;
un disque fixe (9) disposé sur la poignée latérale (2) ;
un mécanisme d'actionnement mobile (7) pour la connexion et la déconnexion du disque mobile (6) par rapport au disque fixe (9) ;
un mécanisme de verrouillage (12) disposé sur la poignée latérale (2),
chaque paire de ressorts de torsion (19) étant disposée le long de chaque arbre d'entraînement (4) entre la poignée centrale (2) et la poignée latérale (2), et
le premier ressort (19) de la paire de ressorts de torsion (19) :
étant accouplé au niveau de sa première extrémité à la poignée latérale (2) à l'aide d'un premier arbre (10), le premier arbre (10) ayant un deuxième embrayage (11) s'accouplant avec le mécanisme de verrouillage (12) de l'embrayage à griffes (7), et un troisième embrayage (13) s'accouplant avec le premier engrenage (8) de l'arbre d'entraînement (4) ;
et étant accouplé au niveau de sa seconde extrémité à l'embrayage à friction multidisque (18) à l'aide d'un quatrième arbre (17) comprenant le quatrième engrenage (16) monté sur le quatrième arbre (17) et s'accouplant avec l'embrayage unidirectionnel (5) de l'arbre d'entraînement (4), le quatrième arbre (17) étant accouplé à l'embrayage à friction multidisque (18) à travers la poignée centrale (2)
le second ressort (19) de la paire de ressorts de torsion (19) :
étant accouplé au niveau de sa première extrémité à la poignée latérale (2) à l'aide d'un deuxième arbre (14), un troisième embrayage (13) s'accouplant avec le premier embrayage (8) de l'arbre d'entraînement (4) étant monté sur le deuxième arbre (14) ;
et étant accouplé au niveau de sa seconde extrémité au troisième arbre (15), un quatrième embrayage (16) s'accouplant avec un embrayage unidirectionnel (5) de l'arbre d'entraînement (4) étant monté sur le quatrième arbre, et le quatrième arbre (15) étant connecté, dans les roulements, à la poignée centrale (2).
